# EUROPÄISCHE PATENTSCHRIFT

(11) **EP 3 307 480 B1**
(45) Veröffentlichungstag und Bekanntmachung des Hinweises auf die Patenterteilung: **02.11.2022**
(21) Anmeldenummer: 16727470.3
(22) Anmeldetag: 02.06.2016
(51) Int. Cl.: B23Q 17/22

(54) **GERÄT UND VERFAHREN ZUR AUSRICHTUNG EINES ROHRS BEI EINEM UMSPANNVORGANG**
DEVICE AND METHOD FOR ALIGNING A PIPE DURING A FORMING PROCESS
APPAREIL ET PROCÉDÉ D'ALIGNEMENT D'UN TUYAU LORS D'UNE OPÉRATION DE REMONTAGE EN MANDRIN

(30) Priorität: 09.06.2015 DE 102015109117
(43) Veröffentlichungstag der Anmeldung: 18.04.2018
(73) Patentinhaber: GSI Helmholtzzentrum für Schwerionenforschung GmbH, 64291 Darmstadt (DE)
(72) Erfinder: EIBEN, Tino, 64395 Brensbach (DE)
(86) Internationale Anmeldenummer: PCT/EP2016/062525
(87) Internationale Veröffentlichungsnummer: WO 2016/198313

(56) Entgegenhaltungen:
- JP-A- H05 141 909
- US-A- 2 611 971
- US-A- 2 777 210
- US-A- 2 961 771
- US-B1- 6 817 111

## Beschreibung

Die Erfindung betrifft eine Werkstückausrichtungsvorrichtung zur Ausrichtung eines Werkstücks, insbesondere bei einem Umspannvorgang des Werkstücks während dessen Bearbeitung, und bevorzugt die Ausrichtung des Werkstücks bezüglich genau einer Drehachse. Weiterhin betrifft die Erfindung ein Verfahren zum definierten Repositionieren eines Werkstücks.

In der Technik ist es aus unterschiedlichsten Gründen oftmals erforderlich, dass ein Werkstück im Laufe eines Bearbeitungsvorgangs umgespannt werden muss. Unter einem "Umspannen" kann man dabei ganz allgemein ein temporäres Lösen von einer Haltevorrichtung verstehen.

Als ein einfaches Beispiel: Ein Werkstück ist in einer zangenartigen Klemmvorrichtung (beispielsweise schraubzwingenartige Vorrichtung, Schraubstock und dergleichen) eingespannt, sodass dieses (auch bei einem Bearbeitungsvorgang) seine Position nicht verändert (natürlich von "Extremfällen" abgesehen, bei denen es beispielsweise durch das Ausüben einer unbeabsichtigt hohen Kraft zu einem Verrutschen des Werkstücks kommen kann). Nach einem ersten Bearbeitungsschritt (bzw. einer ersten Abfolge von Bearbeitungsschritten) muss das Werkstück gelöst und in eine andere Position versetzt werden. In der neuen Position kann anschließend ein zweiter Bearbeitungsvorgang (bzw. eine zweite Abfolge von Bearbeitungsvorgängen) erfolgen. Selbstverständlich ist es auch denkbar, dass hiernach anschließend noch weitere Umspannvorgänge und/oder weitere Bearbeitungsschritte ( Abfolgen von Bearbeitungsschritten) erfolgen.

Bei dem Umspannvorgang ist es zwar einerseits erwünscht, dass das Werkstück eine andere Position einnimmt. Diese Veränderung der Position soll dabei jedoch in der Regel nur bezüglich bestimmter Bewegungsfreiheitsgrade erfolgen, wohingegen eine Bewegung bezüglich anderer Bewegungsfreiheitsgrade nicht erfolgen soll. Beispielsweise soll eine Translationsbewegung (beispielsweise entlang einer oder mehrerer Achsen) erfolgen; eine Rotation entlang einer (oder mehrerer) Achsen soll hingegen nicht erfolgen. Zusätzlich oder alternativ ist es auch denkbar, dass eine Translation entlang einer (oder zweier) Achsen erfolgen soll, wohingegen eine Translation entlang der verbliebenen Achse(n) möglichst ausgeschlossen werden soll. Ebenso ist es zusätzlich oder alternativ denkbar, dass eine Rotation entlang einer (oder zweier) Rotationsachsen erfolgen soll, wohingegen eine Rotation um eine (oder zwei) Rotationsachsen möglichst ausgeschlossen werden soll.

Das erwähnte Umspannen kann erforderlich sein, um eine einfachere Bearbeitung zu ermöglichen (definierte Winkellage des Werkzeugs gegenüber dem zu bearbeitenden Werkstück; Zugänglichkeit des Werkstücks und dergleichen) oder um sonstige nachteilige Effekte zu vermeiden oder zu verringern (beispielsweise ansonsten entstehende ungünstige Hebelarme bei einem im Verhältnis zur Spannvorrichtung besonders langen Werkstück (beispielsweise Einspannen eines langen Rohrs in einen Schraubstock mit kurzen Spannbacken oder dergleichen)).

Als ein einfaches und vergleichsweise "alltägliches" Beispiel soll das Anbringen von zwei Gehrungsschnitten an einem Rohr betrachtet werden. Ein solcher Bearbeitungsvorgang kommt beispielsweise bei Installationsarbeiten (Wasserleitungen, Heizungsrohre, Hohlrohre zur Aufnahme von elektrischen Leitungen und dergleichen) regelmäßig vor. An einem Ende des Rohrs, welches in einem Schraubstock horizontal eingespannt ist (Ermittlung der horizontalen Lage mittels einer Wasserwaage; die Winkelposition bezüglich der (Rotations-) Längsachse des Rohrs ist anfänglich aufgrund der Rotationssymmetrie des Rohrs noch unerheblich), wird nunmehr mit einem Werkzeug (Säge, Trennschleifer und dergleichen) ein Gehrungsschnitt (beispielsweise von 30°, 45° oder 60°; selbstverständlich sind hier auch andere Winkel möglich und üblich) angebracht. Aufgrund der typischerweise großen Länge des Rohrs im Verhältnis zur Länge der Spannbacken des Werkzeugs ist es in der Regel problematisch (wenn nicht sogar im Wesentlichen de facto unmöglich) das andere Ende des Rohrs zu bearbeiten, beispielsweise durch Anbringen eines weiteren Gehrungsschnitts. Dies rührt einerseits daher, dass das Rohr aufgrund seiner Länge an einem Ende "durchhängen" kann (insbesondere, wenn dieses aufgrund des Bearbeitungsvorgangs mit einer gewissen Kraft beaufschlagt werden muss) und/oder aufgrund eines Bearbeitungsvorgangs zu Schwingungen neigen kann. Zum Teil ist es auch schwierig, das zu bearbeitende Ende "sinnvoll zu erreichen", beispielsweise wenn typische Werkzeugständervorrichtungen (Werkzeughaltevorrichtung mit integrierter Haltevorrichtung (beispielsweise einer Schraubzwinge oder eines Schraubstocks) und integriertem Werkzeug) genutzt werden. In einem solchen Fall muss also das Rohr aus der Schraubzwinge gelöst werden, umgesetzt werden (typischerweise Drehen um die Hochachse bzw. die Querachse und laterales Verschieben des Rohrs in Richtung Rohrlängsachse) und das Werkstück erneut in der Schraubzwinge eingespannt werden.

Da die beiden Gehrungsschnitte jedoch eine bestimmte Winkellage zueinander einnehmen müssen (typischerweise parallel zueinander oder "antiparallel" zueinander), muss dieses Einspannen (Festspannen) in einer Winkellage erfolgen, die zu der vorherigen Winkellage "korrespondiert". Unter einer "antiparallelen" Ausrichtung ist vorliegend insbesondere zu verstehen, dass sich die Linien beider Schnittflächen, die an den jeweiligen Schnittflächen mit der Mittelachse des Rohrs den kleinsten Winkel einschließen, wobei die betreffenden Linien diametral beabstandete Punkte entlang der betreffenden Schnittfläche durchlaufen, einander schneiden und nicht windschief zueinander liegen (Definition gilt zumindest für kreisrunde Rohre; für hiervon abweichende Querschnittsgeometrien gilt das Gesagte in Analogie).

Um die genannte Ausrichtung des Werkstücks nach dessen Umsetzen (Repositionieren) zu realisieren, wurden in der Vergangenheit bereits unterschiedliche Verfahren vorgeschlagen. Beispielsweise wurde hierbei auf der bereits bearbeiteten Seite, die der neu zu bearbeitenden Seite gegenüberliegt, eine Abstandslehre angeordnet. Durch Drehen des Rohrs wird dann der Punkt gesucht, bei dem die Abstandslehre am weitesten eingedrückt wird (oder alternativ am weitesten hervorsteht) und auf diese Weise die Winkellage des Rohrs anzeigt. Problematisch hierbei ist, dass das von dem Schraubstock beabstandete Ende des Rohrs in der gleichen "Höhenlage" wie die Abstandslehre liegen muss, um Messfehler zu vermeiden (bei einem Durchhängen des Rohrs muss also die Abstandslehre entsprechend tiefer angeordnet werden). Auch können (selbst leichte) Längsverschiebungen des Werkstücks (also beispielsweise des Rohrs), die Messung stark verfälschen. Es ist leicht einsichtig, dass dieses Verfahren einerseits umständlich ist und andererseits auch leicht zu Messfehlern führen kann.

US 6 817 111 B1 offenbart eine Vorrichtung nach dem Oberbegriff des Anspruchs 1.

Die Aufgabe der Erfindung liegt somit darin, eine Werkstückausrichtungsvorrichtung zur Ausrichtung eines Werkstücks vorzuschlagen, welche gegenüber im Stand der Technik bekannten Werkstückausrichtungsvorrichtungen verbessert ist. Eine weitere Aufgabe der Erfindung ist es, ein Verfahren zum definierten Repositionieren eines Werkstücks vorzuschlagen, welches gegenüber im Stand der Technik bekannten Verfahren zum Repositionieren eines Werkstücks verbessert ist.

Die vorliegende Erfindung gemäß Anspruch 1 löst diese Aufgabe.

Bei dem Werkstück kann es sich um ein grundsätzlich beliebiges Werkstück handeln. Besonders vorteilhaft ist die Verwendung der vorgeschlagenen Vorrichtung (also der Werkstückausrichtungsvorrichtung; analog des vorgeschlagenen Verfahrens bzw. der Verwendung der Werkstückausrichtungsvorrichtung, wie im Folgenden noch näher erläutert), wenn es sich um ein Werkstück handelt, welches vergleichsweise weit von einer Haltevorrichtung (zum Beispiel einer Spannvorrichtung, insbesondere einer schraubstockartigen Einrichtung) hervorsteht. Beispielsweise kann es sich um ein stangenartiges Gebilde bzw. eine Art Rohr oder ein längliches kastenartiges Gebilde oder dergleichen handeln. Bevorzugt ist es darüber hinaus, wenn das Werkstück eine längliche Geometrie aufweist, also die Länge des Werkstücks im Verhältnis zur Breite und/oder Höhe des Werkstücks besonders groß ist (beispielsweise größer als jeweils ein Faktor 5, 10, 15, 20 oder dergleichen). Besonders vorteilhaft kann die Werkstückausrichtungsvorrichtung (und analog dazu das Verfahren bzw. die Verwendung der Werkstückausrichtungsvorrichtung) dann sein, wenn das Werkstück eine gewisse Symmetrie hat (beispielsweise eine Rotationssymmetrie um eine Achse, eine Punktsymmetrie um einen Punkt bzw. um eine Achse (in diesem Fall bezieht sich die Punktsymmetrie typischerweise jeweils auf eine Querschnittsebene) oder eine Achsensymmetrie (auch hier bezieht sich die Achsensymmetrie typischerweise auf eine besonders ausgezeichnete Achse der Vorrichtung, wie beispielsweise eine Art Mittelachse) oder aber auch eine Symmetrie zu einer (typischerweise besonders ausgezeichneten) Schnittebene). Bei dem Umspannvorgang des Werkstücks handelt es sich in aller Regel um ein temporäres Lösen des Werkstücks von einer Haltevorrichtung. Selbstverständlich kann das temporäre Lösen auch mehrfach erfolgen. Auch ist es denkbar, dass beim Wiederbefestigen des Werkstücks in der Haltevorrichtung (beispielsweise Schraubstock oder dergleichen) eine andere Haltevorrichtung als vor dem Umspannvorgang genutzt wird. Meist ist das Umspannen mit einer Bewegung des Werkstücks verbunden. Typischerweise erfolgt ein Umsetzen in einer transversalen Richtung und/oder um eine Rotationsachse herum (wobei sich dies jeweils auf eine "gewollte Verschiebung" bezieht; die "ungewollte Verschiebung" (typischerweise eine Drehung um eine oder mehrere Rotationsachsen; andere Bewegungen können hier jedoch ebenso zutreffend sein) soll ja gerade durch die Werkstückausrichtungsvorrichtung "verhindert" bzw. "beseitigt" oder "repariert" werden). Typischerweise erfolgt das temporäre Lösen des Werkstücks derart, dass dieses vollständig unabhängig von der Haltevorrichtung ist. Denkbar ist es aber auch, dass trotz des temporären Lösens zu Zwecken des Umspannens dennoch eine gewisse "Haltewirkung" bzw. "Führungswirkung" verbleibt. Bei der Bearbeitung des Werkstücks kann es sich um eine grundsätzlich beliebige Art der Bearbeitung handeln. Insbesondere kann es sich hierbei um materialabtragende Verfahren handeln, insbesondere um materialabtragende Verfahren, bei denen eine gewisse Andruckkraft ausgeübt werden muss, um das Verfahren durchführen zu können (beispielsweise Sägen, Fräsen, Feilen, Trennschleifen oder dergleichen). Die Absolutrichtungsanzeigeeinrichtung kann grundsätzlich beliebig aufgebaut sein. Ganz allgemein ist sie typischerweise derart aufgebaut, dass sie eine Überprüfung ermöglicht, ob sich das Werkstück (insbesondere nach einem Umspannvorgang) (erneut) in einer definierten Position befindet, wobei als Vergleichsmaßstab eine extern vorgegebene, definierte "Absolutrichtung" dient. Dabei ist es sowohl möglich, dass die "Absolutrichtung" vom Werkstück eingenommen werden muss. Ebenso ist es aber auch denkbar, dass das Werkstück (zumindest bei gewissen Schritten eines Bearbeitungsverfahrens) eine um einen definierten Betrag abweichende Position von der Absolutrichtung aufweisen muss. Beispielsweise kann es sein, dass in einem ersten Bearbeitungsschritt eine bestimmte Ausrichtung vorhanden sein muss; in einem zweiten Bearbeitungsschritt dagegen eine um 180° versetzte Ausrichtung erforderlich ist. Wie bereits der Begriff "Absolutrichtung" impliziert, handelt es sich bei einer dezidierten Lage in aller Regel um einen gewissen Winkelversatz des Werkstücks bezüglich einer besonders ausgezeichneten, typischerweise einer extern vorgegebenen Richtung. Dieser kann sich auf eine Winkelrichtung, auf zwei Winkelrichtungen und/oder auf drei Winkelrichtungen bezüglich der drei Raumrichtungen (Rotationsfreiheitsgrade) beziehen. Die hierzu heranzuziehenden "Vergleichsflächen" bzw. "Vergleichsrichtungen" des Werkstücks werden dabei typischerweise durch bevorzugte bzw. besonders ausgezeichnete Referenzlinien bzw. Referenzebenen des Werkstücks (zum Beispiel bezüglich gewisse Symmetrien des Werkstücks) definiert. Beispielsweise kann ein Winkelversatz in einer Ebene, welche senkrecht zu einer Längsrichtung eines rohrartigen (oder sonstigen länglich ausgebildeten) Werkstücks liegt, einen besonders "sinnvollen Winkel" darstellen. Die gegebenenfalls verbleibenden zwei oder drei Winkelangaben, die von der Absolutrichtungsanzeigeeinrichtung nicht "erfasst" bzw. "dargestellt" werden, können von der betreffenden Absolutrichtungsanzeigeeinrichtung vollständig "unterdrückt" werden. Dies kann einerseits dahingehend Vorteile haben, dass die Bedienung der Werkstückausrichtungsvorrichtung bzw. der Absolutrichtungsanzeigeeinrichtung besonders einfach wird (da "unerhebliche Angaben" dem Benutzer nicht dargestellt werden), andererseits kann aber auch dahingehend einen Vorteil mit sich bringen, dass der Aufbau der Werkstückausrichtungsvorrichtung besonders einfach ausfallen kann, was insbesondere unter Kostengesichtspunkten vorteilhaft sein kann und/oder zu einem robusteren Aufbau der Werkstückausrichtungsvorrichtung führen kann (was beispielsweise in Werkstätten bzw. auf Baustellen von durchaus signifikantem Vorteil sein kann). Die Absolutrichtungsanzeigeeinrichtung kann die Absolutrichtung auf im Wesentlichen "beliebige Art anzeigen". So ist es denkbar, dass ein gewisser Winkelversatz des Werkstücks zur Absolutrichtungsanzeigeeinrichtung dargestellt wird (sodass für den Benutzer transparent ist, wie weit das Werkstück noch gedreht werden muss). Dies kann auch dann vorteilhaft sein, wenn beispielsweise bei einem Umspannvorgang ein definierter Winkelversatz des Werkstücks (von der ursprünglichen Position bzw. von der Absolutrichtung) eingenommen werden soll. Möglich ist es aber auch, dass lediglich eine Art einer "Korrekt-Anzeige" erfolgt, wenn eine korrekte Lage eingenommen ist. Letzteres kann bei bestimmten Anwendungsfällen besonders intuitiv und dementsprechend vorteilhaft sein. Besonders vorteilhaft kann im Übrigen auch eine Kombination aus beiden "Anzeigearten" sein. Die von der betreffenden Absolutrichtungsanzeigeeinrichtung gegebenenfalls "unterdrückten" Winkelangaben (Ausrichtungs-Richtungen bezüglich anderer als der von der Absolutausrichtungsanzeigeeinrichtung angezeigten Richtung) können im Übrigen durch eine, zwei oder weitere Absolutrichtungsanzeigeeinrichtungen dargestellt werden, insbesondere dann, wenn die "zusätzlichen Winkelangaben" von Relevanz für den Umspannvorgang bzw. die weiteren Bearbeitungsschritte des Werkstücks sind. Die Befestigungseinrichtung ist typischerweise derart ausgebildet, dass sie eine temporäre Befestigung der Werkstückausrichtungsvorrichtung (und damit mittelbar oder unmittelbar der Absolutrichtungsanzeigeeinrichtung) am Werkstück ermöglicht. Gegebenenfalls kann man also auch von einer Temporärbefestigungseinrichtung sprechen. Insbesondere sind hierbei Vorrichtungen von Vorteil, die das Werkstück nicht beschädigen, nur in solchen Bereichen beschädigen, die beispielsweise bei weiteren Bearbeitungsschritten entfernt werden, oder im Wesentlichen nicht-relevante Beschädigungen (beispielsweise leichte Kratzspuren oder dergleichen) hervorrufen. Vorteilhaft ist es ebenfalls, wenn die Befestigungseinrichtung mit möglichst wenigen und/oder mit möglichst intuitiven Bedienschritten am Werkstück befestigt werden kann. Hierzu eignen sich beispielsweise Festlegungsschrauben, Schraubgewinde, Schnellspanneinrichtungen, Fixierungsbänder und dergleichen (zum Teil auch in Kombination). Die Befestigung der Befestigungseinrichtung am Werkstück und/oder an sonstigen Einrichtungen kann insbesondere zumindest bereichsweise und/oder zumindest teilweise und/oder zumindest in bestimmten Richtungen (Rotationsrichtungen und/oder Translationsrichtungen) kraftschlüssig, formschlüssig und/oder stoffschlüssig erfolgen. Lediglich der Vollständigkeit halber wird darauf hingewiesen, dass selbstverständlich gewisse Winkelungenauigkeiten auftreten können. Diese sind jedoch oftmals, zumindest bei bestimmten Anwendungsfällen, in einem gewissen Bereich ohne weiteres tolerierbar. Der tolerierbare Bereich ergibt sich dabei aus der konkreten Anwendung. Dementsprechend ist eine Bezugnahme wie "Ausrichtung auf eine Winkellage" im Rahmen der vorliegenden Beschreibung in aller Regel auch als "Einstellen auf im Wesentlichen eine Winkellage" bzw. "Einstellen auf eine Winkellage, wobei ein Toleranzbereich zulässig ist", "Einstellen auf einen Toleranzbereich um eine definierte Winkellage herum" oder dergleichen zu verstehen. Ebenfalls der Vollständigkeit halber wird darauf hingewiesen, dass die Werkstückausrichtungsvorrichtung selbstverständlich eine Mehrzahl an Absolutrichtungsanzeigeeinrichtungen und/oder eine Mehrzahl an Befestigungseinrichtungen (beispielsweise zur Befestigung an unterschiedlichen Werkstücken) und/oder eine oder eine Mehrzahl an sonstigen Einrichtungen aufweisen kann. Auch ist es denkbar, dass die Werkstückausrichtungsvorrichtung als mehrteilige Einrichtung ausgebildet ist und insbesondere als eine Art Bausatz aus Einzelteilen (teilweise auch austauschbaren Alternativ-Einzelteilen) vermarktet und/oder gelagert (beispielsweise in einer Art Werkzeugkoffer) werden kann.

Von Vorteil ist es, wenn bei der Werkstückausrichtungsvorrichtung die Befestigungseinrichtung als eine, eine gesonderte Korrespondenzbefestigungseinrichtung entbehrende, Befestigungseinrichtung ausgebildet ist. Hierdurch kann die Bedienung der Werkstückausrichtungsvorrichtung gegebenenfalls nochmals vereinfacht werden. Besonders vorteilhaft ist es darüber hinaus, wenn die Werkstückausrichtungsvorrichtung mit im Wesentlichen "beliebigen Werkstücken" verwendet werden kann, also insbesondere derart, dass die Werkstücke für die Verwendung mit der Werkstückausrichtungsvorrichtung nicht (oder bestenfalls in nur geringem Maße) speziell eingerichtet sein müssen (bzw. vorbereitet werden müssen; beispielsweise durch gewisse Bearbeitungsvorgänge). Hierdurch kann eine besonders breite und universelle Verwendbarkeit der Werkstückausrichtungsvorrichtung (also eine Verwendbarkeit für eine große Bandbreite von Werkstücken) sichergestellt werden. Dies kann die Akzeptanz der Werkstückausrichtungsvorrichtung deutlich steigern. Das schließt es nicht aus, dass die Werkstückausrichtungsvorrichtung (oder eine - gegebenenfalls auswechselbare - Befestigungseinrichtung und/oder ein Teil hiervon) für die Befestigung an einem bestimmten Typ von Werkstück und/oder einer bestimmten Größe des Werkstücks optimiert ist (einschließlich einer "im Wesentlichen ausschließlichen Verwendbarkeit" für einen gewissen Größenbereich und/oder Formartenbereich). Rein beispielhaft kann die Befestigungseinrichtung derart ausgebildet sein, dass sie (sinnvoll) nur im Zusammenhang mit Rohren verwendet werden kann und/oder derart, dass der in Zusammenhang mit der Befestigungseinrichtung (sinnvoll) verwendbare Größenbereich in einem bestimmten Intervall liegt (also Verwendbarkeit eines Typs einer (vorzugsweise austauschbaren) Befestigungseinrichtung im Zusammenhang mit Rohren, die einen gewissen Durchmesserbereich aufweisen). Dieses ist nicht notwendigerweise nachteilig, da auch heute schon bestimmte Werkzeugarten typischerweise für gewisse Einsatzzwecke optimiert (bzw. im Wesentlichen ausschließlich für bestimmte Einsatzzwecke nutzbar) verwendet und gehandelt werden. Im Gegenteil ist es dadurch möglich, dass die Verwendung der Werkstückausrichtungsvorrichtung für den gegebenen Einsatzzweck vereinfacht wird und/oder die Werkstückausrichtungsvorrichtung (insbesondere die Befestigungseinrichtung) besonders einfach ausgebildet werden kann.

Weiterhin wird vorgeschlagen, dass die Werkstückausrichtungsvorrichtung derart ausgebildet ist, dass die Befestigungseinrichtung größenanpassbar ausgebildet ist, insbesondere zur Anpassung an unterschiedlich große und/oder unterschiedlich geformte Werkstücke. Auch hier ist es denkbar, dass insbesondere im Sinne der vorangehenden Beschreibung, von der Befestigungseinrichtung gewisse Größenbereiche bzw. gewisse "Formenbereiche", "Formenschätze" bzw. "Formenarten" abgedeckt werden können. Sollte ein Werkstück (oder ein Teil eines Werkstücks) "jenseits des vorgesehenen Bereichs" (sei es Größe und/oder Form) liegen, so ist es bevorzugt, wenn die Befestigungseinrichtung als austauschbare Befestigungseinrichtung ausgebildet ist. Durch Vorsehen eines Satzes an unterschiedlichen Befestigungseinrichtungen kann durch Wahl der jeweils geeignetsten Befestigungseinrichtung ein insgesamt besonders großer Bereich abgedeckt werden.

Dementsprechend ist es sinnvoll, wenn bei der Werkstückausrichtungsvorrichtung die Befestigungseinrichtung mehrteilig ausgebildet ist und insbesondere ein anpassbares und/oder auswechselbares Übergangselement aufweist und/oder wenn die Befestigungseinrichtung als anpassbare und/oder auswechselbare Befestigungseinrichtung ausgebildet ist. In diesem Fall können sich die bereits vorab genannten Vorteile in besonderem Maße und/oder auf besonders einfache Weise ergeben. Speziell bei einer mehrteiligen Ausbildung der Befestigungseinrichtung können unter Umständen besonders große Größendifferenzen abgedeckt werden (in diesem Zusammenhang ist darauf hinzuweisen, dass zumindest eine Seite zumindest einer Befestigungseinrichtung (nämlich die Seite, an der eine Absolutrichtungsanzeigeeinrichtung festgelegt ist) in aller Regel eine bestimmte, vorgegebene Größe und/oder Form aufweisen muss). Besonders große Größenänderungen und/oder Formänderungen können dann durch einen mehrteiligen Aufbau der Befestigungseinrichtung vorteilhaft ausgeglichen werden. Der Vollständigkeit halber wird darauf hingewiesen, dass es bei einer mehrteiligen Ausbildung der Befestigungseinrichtung möglich ist, dass die Befestigung der Teile der Befestigungseinrichtung (zumindest einiger hiervon; betrifft insbesondere Übergangselemente) "untereinander" und/oder die Befestigung der Befestigungseinrichtung am Werkstück und/oder an der (einer) Absolutrichtungsanzeigeeinrichtung "auf die gleiche Weise erfolgt" (also jeweils beispielsweise kraftschlüssig). Ebenso ist es aber auch möglich, dass die Befestigung zumindest teilweise und/oder bei zumindest Teilen der miteinander zu verbindenden Teile zumindest teilweise "unterschiedlich erfolgt" also beispielsweise derart, dass die Befestigung der Befestigungseinrichtung am Werkstück (überwiegend) kraftschlüssig erfolgt, wohingegen die Befestigung zweier Teile der Befestigungseinrichtung untereinander (insbesondere Verbindung zweier Übergangselemente aneiner) (überwiegend) formschlüssig erfolgt.

Weiterhin wird vorgeschlagen, dass bei der Werkstückausrichtungsvorrichtung die Befestigungseinrichtung drehfest und/oder drehfest befestigbar ausgebildet ist, derart, dass eine zumindest drehfeste Verbindung zwischen Werkstück und Absolutrichtungsanzeigeeinrichtung bezüglich vorzugsweise genau einer Drehachse gegeben ist. Möglich ist es, dass die drehfeste Verbindung derart ausgeführt ist, dass die Verbindung (zumindest in einem gewissen Bereich) "nur" drehfest ausgebildet ist, dass also beispielsweise in zumindest einem gewissen Bereich eine Verschiebebewegung oder dergleichen denkbar ist. Mit einem derartigen Aufbau ist es beispielsweise möglich, dass die Befestigungseinrichtung besonders intuitiv verwendbar ist und/oder einen vereinfachten Aufbau aufweisen kann. Beispielsweise könnte eine Art rohrartige Einrichtung eine (innen und/oder außen ausgebildete) Führungsnut oder einen (innen oder außen vorgesehenen) Führungssteg aufweisen, der mit einem bei der Befestigungseinrichtung vorgesehenen, korrespondierenden Steg bzw. einer Nut in Eingriff kommt und eine drehfeste Verbindung ausbildet (obgleich die Werkstückausrichtungsvorrichtung lediglich "lose aufgesteckt ist"). Möglich ist es aber auch, dass unter der drehfesten Verbindung eine Verbindung verstanden wird, die "komplett fest" ist (zumindest in bestimmte Richtungen (Transversalrichtungen, Drehrichtungen) und/oder bis hin zu gewissen einwirkenden Kräften bzw. Drehmomenten). Die "Dimension der Drehfestigkeit" (Minimalforderung) korrespondiert dabei mit der "Anzahl von Winkellagen", die von der Absolutrichtungsanzeigeeinrichtung (bzw. den Absolutrichtungsanzeigeeinrichtungen) dargestellt werden soll. Zusätzliche drehfeste Verbindungen (also drehtfeste Verbindungen in "größerer Anzahl") sind jedoch ohne weiteres möglich und in aller Regel nicht schädlich. Entsprechendes gilt nicht nur für die "Anzahl", sondern auch für die "Richtung" der drehfesten Verbindung.

Eine weitere bevorzugte Ausbildungsform der Werkstückausrichtungsvorrichtung ergibt sich meist, wenn die Absolutrichtungsanzeigeeinrichtung eine Einrichtung aufweist oder als Einrichtung ausgebildet ist, die der Gruppe entnommen ist, welche Schwerkraftrichtungsmesseinrichtungen, Schwerkraftrichtungsanzeigeeinrichtungen, Magnetfeldlinienrichtungsmesseinrichtungen, Magnetfeldlinienrichtungsanzeigeeinrichtungen, Kreiseleinrichtungen, Iotartige Einrichtungen, Lichtstrahleinrichtungen, Lichtstrahlerzeugungseinrichtungen, Lichtstrahlbeeinflussungseinrichtungen und Lichtreflexionseinrichtungen umfasst. Bei den Lichtstrahlen kann es sich insbesondere um Laserstrahlen handeln. Aber auch "klassisch erzeugte" Lichtstrahlen (zum Beispiel mittels einer Spaltlampe) sind selbstverständlich ohne weiteres denkbar. Bei einer derartigen Ausbildung der Werkstückausrichtungsvorrichtung ergibt sich in der Regel ein besonders einfacher Aufbau und/oder eine besondere Genauigkeit und/oder eine besonders universelle Verwendbarkeit und/oder eine besonders intuitive Bedienbarkeit der Werkstückausrichtungsvorrichtung. Für den Fall, dass eine Mehrzahl an Absolutrichtungsanzeigeeinrichtungen vorgesehen ist, können diese in beliebiger Weise (zumindest teilweise) auf einem gleichartigen Prinzip beruhen und/oder sich unterschiedlicher Prinzipien bedienen.

Besonders vorteilhaft kann es sein, wenn die Werkstückausrichtungsvorrichtung derart ausgebildet ist, dass die Absolutrichtungsanzeigeeinrichtung eine Umsetzungseinrichtung, insbesondere eine Untersetzungseinrichtung und/oder eine Übersetzungseinrichtung aufweist. Hierdurch kann einerseits das Spektrum an Einsatzgebieten erhöht werden, andererseits aber auch die Genauigkeit erhöht werden. Eine Übersetzungseinrichtung kann dabei eine Einrichtung sein, bei der beispielsweise ein Winkelversatz des Werkstücks "in vergrößerter Form" von der Absolutrichtungsanzeigeeinrichtung dargestellt wird. Dies kann beispielsweise durch eine Digitalanzeige, aber auch durch eine Analoganzeige erfolgen. Bei einer Analoganzeige kann diese derart ausgebildet sein, dass beispielsweise ein Verdrehen des Werkstücks um 5° zu einem veränderten Zeigerausschlag von 10° (Faktor 2), 20° (Faktor 4) oder dergleichen führt. Hierdurch kann die Genauigkeit der Ausrichtung des Werkstücks besonders einfach erhöht werden. Umgekehrt kann aber auch eine Untersetzungseinrichtung von Vorteil sein, beispielsweise wenn ein "mehrfaches Verdrehen" angezeigt werden soll, was beispielsweise bei spiralartig bzw. schraubenartig geformten Werkstücken, die gegebenenfalls mehrfach umgespannt werden müssen, von Vorteil sein kann. Hier ist es beispielsweise denkbar, dass eine einfache Umdrehung eine verringerte Anzeige bei der Absolutrichtungsanzeigeeinrichtung bewirkt (beispielsweise einfache Umdrehung bewirkt Änderung um einen Skalenstrich, wobei beispielsweise zehn Skalenstriche vorgesehen sind - Umsetzung um einen Faktor 10). Möglich ist verblüffenderweise auch eine Kombination von Übersetzungseinrichtung und Untersetzungseinrichtung (gegebenenfalls auch mit einer "Normalübertragungseinrichtung" ohne Umsetzungswirkung), beispielsweise durch Vorsehen zweier (bzw. mehrerer) Zeiger bei einer Analogskala oder eines (bzw. mehrerer) Anzeigefelder bei einer Digitalskala. Hierdurch kann besonders vorteilhaft eine Kombination der beiden beschriebenen vorteilhaften Eigenschaften bewirkt werden. Als Umsetzungsfaktoren können insbesondere die Faktoren 1, 2, 3, 4, 5, 10, 15, 20, 25, 30, 40, 50, 60, 70, 75, 80, 90 und 100 (gegebenenfalls auch höher) dienen, wobei die genannten Werte jeweils als Untergrenze und/oder Obergrenze fungieren können.

Vorteilhaft kann es weiterhin sein, wenn die Werkstückausrichtungsvorrichtung derart ausgebildet ist, dass die Werkstückausrichtungsvorrichtung, insbesondere die Absolutrichtungsanzeigeeinrichtung und/oder die Befestigungseinrichtung ein Nullstellungsmittel, ein Justagemittel, ein Verstellmittel und/oder ein Einstellmittel aufweist. Hierdurch kann beispielsweise die Position eines Werkstücks vor dem (bzw. vor einem) Umsetzungsvorgang "festgehalten werden", wodurch der anschließende Repositionierungsvorgang nach dem Umsetzen besonders intuitiv und/oder einfach realisiert werden kann. Das "Festhalten" kann dabei durch ein einfaches Nullstellen realisiert werden. Möglich ist es aber ebenso, dass beispielsweise eine gewisse "ganzzahlige" Anzeige (oder eine runde Zahl oder dergleichen) eingestellt wird und diese nach dem Umsetzen wieder eingestellt werden muss. Sollte die Repositionierung nach dem Umsetzvorgang derart erfolgen müssen, dass ein definiertes Verdrehen des Werkstücks um einen gewissen Winkelbetrag erforderlich ist (beispielsweise Drehung um 180° oder dergleichen), dann kann die Absolutrichtungsanzeigeeinrichtung beispielsweise vor dem Umspannvorgang "genullt werden", woraufhin anschließend ein gewisser "Versatzbetrag" eingestellt werden muss. Ebenso ist es aber auch möglich, dass vor dem Umspannen ein gewisser "Versatzbetrag" eingestellt werden muss und nach dem Umspannen eine "Nullanzeige" realisiert werden muss. Natürlich ist es auch denkbar, dass vor dem Umspannen ein "gewisser Zahlenwert" eingestellt wird, wobei nach dem Umspannen der gleiche Zahlenwert mit umgekehrten Vorzeichen (oder mit einem gewissen, sinnvollen Differenzbetrag) eingestellt werden muss. Auch beliebige sonstige Anpassungen sind hier natürlich denkbar.

Weiterhin ist es vorteilhaft, wenn die Werkstückausrichtungsvorrichtung derart ausgebildet ist, dass die Absolutrichtungsanzeigeeinrichtung zumindest eine Informationsanzeigeeinrichtung aufweist, insbesondere eine Messwertanzeigeeinrichtung. Die entsprechenden Anzeigeeinrichtungen können dabei "binär" sein (korrekter Wert oder nicht korrekter Wert; ein gewisser Toleranzbereich ist hierbei vorzusehen) oder aber auch beispielsweise Richtung und Ausmaß eines Versatzes (Winkelversatzes) darstellen. Je nach Erfordernis können sich hier unterschiedliche Arten der Anzeige als sinnvoll erweisen (wobei selbstverständlich auch an eine Kombination unterschiedlicher Anzeigearten zu denken ist).

Weiterhin wird ein Verfahren zum definierten Repositionieren eines Werkstücks vorgeschlagen, bei dem vor der Repositionierung des Werkstücks eine Ausrichtung des Werkstücks relativ zu einer definierten externen Absolutrichtung bezüglich vorzugsweise genau einer Rotationsachse des Werkstücks bestimmt wird und nach dem Repositionieren des Werkstücks mit einer definierten Ausrichtung bezüglich der externen Absolutrichtung repositioniert wird, wobei bevorzugt die vorab bestimmte Ausrichtung des Werkstücks wiederhergestellt wird. Die vorab bestimmte Ausrichtung des Werkstücks kann dabei auch dahingehend aufzufassen sein, dass eine "Anti-Ausrichtung" eingenommen werden muss (also insbesondere ein Verdrehen um 180°). Das vorgeschlagene Verfahren kann die bereits beschriebenen Vorteile und Eigenschaften der vorab beschriebenen Werkstückausrichtungsvorrichtung, zumindest in Analogie, aufweisen. Ebenfalls kann es im Sinne der vorherigen Beschreibung, zumindest in Analogie, abgewandelt und weitergebildet werden.

Insbesondere ist es möglich, dass bei dem vorgeschlagenen Verfahren die Bestimmung der Ausrichtung des Werkstücks mittels einer temporär angebrachten Werkstückausrichtungsvorrichtung vom vorab beschriebenen Aufbau erfolgt. Das Verfahren kann dann die ihm immanenten Vorteile in besonderen Maße umsetzen und/oder auf besonders vorteilhafte und intuitive Weise durchgeführt werden.

Insbesondere ist es möglich, dass bei dem vorgeschlagenen Verfahren die Bestimmung der Ausrichtung des Werkstücks, insbesondere eine Befestigung einer Werkstückausrichtungsvorrichtung, an einer Seite des Werkstücks erfolgt, welche vorzugsweise zeitnah vor der Repositionierung des Werkstücks bearbeitet wurde, wobei die Bestimmung der Ausrichtung des Werkstücks bevorzugt nach der Bearbeitung des Werkstücks in diesem Bereich erfolgt. Die auf diese Weise "bestimmte" Ausrichtung des Werkstücks kann dazu genutzt werden, das Werkstück nach dem (nach einem) Umspannvorgang korrekt bezüglich seiner Winkellage auszurichten (wobei sich - je nach Anwendungsfall - um die gleiche Winkellage oder aber auch um eine um einen definierten Winkel veränderte Winkellage handeln kann). Anschließend kann das Werkstück erneut festgespannt werden und einem weiteren Bearbeitungsschritt (einer Serie von weiteren Bearbeitungsschritten) unterzogen werden. Hierbei handelt es sich um den "klassischen Fall" der Bearbeitung von länglich ausgebildeten Werkstücken (beispielsweise Rohre und dergleichen), insbesondere wenn diese an einer oder an zwei Seiten mit einem Gehrungsschnitt versehen werden sollen, speziell in einem Fall, dass die beiden Gehrungsschnitte auf den beiden Seiten eine bestimmte Winkellage zueinander einnehmen sollen. Rein beispielhaft soll ein Rohr mit zwei "antiparallel" zueinander ausgerichteten Gehrungsschnitten versehen werden. Zunächst wird das Rohr in einem Schraubstock (oder einer sonstigen Haltevorrichtung) festgelegt. Hernach wird ein erster Gehrungsschnitt durchgeführt. Anschließend wird an dem bearbeiteten Ende beispielsweise eine vorab beschriebene Werkstückausrichtungsvorrichtung angeordnet. Nun wird das Rohr temporär gelöst, in seiner Längsrichtung versetzt und gedreht, sodass ein passender "antiparalleler" Schnitt gesetzt werden kann. Vor dem erneuten Festklemmen des Rohrs wird dieses nunmehr hinsichtlich seiner Rotationsachse unter Verwendung des Verfahrens (insbesondere der Werkstückausrichtungsvorrichtung) korrekt positioniert. Anschließend wird das Rohr festgeklemmt und ein weiterer Gehrungsschnitt wird durchgeführt. Es wird darauf hingewiesen, dass das genannte Beispiel mit einem Rohr und "antiparallelen" Gehrungsschnitten lediglich beispielhaft zu verstehen ist und selbstverständlich auch weitere Einsatzmöglichkeiten bestehen.

Besonders vorteilhaft ist es, wenn das Verfahren derart durchgeführt wird, dass vorzugsweise genau eine Rotationsachse des Werkstücks zumindest im Wesentlichen mit einer Symmetrieachse des Werkstücks übereinstimmt, insbesondere mit einer Rotationssymmetrieachse und/oder einer Spiegelsymmetrieachse und/oder einer Punktsymmetrieachse und/oder einer Normalen zu einer Spiegelsymmetrieebene und/oder einer Normalen zu einer Punktsymmetrieebene des Werkstücks. Auch hier können sich geometriebedingt besonders vorteilhafte Wirkungen und Eigenschaften des vorgeschlagenen Verfahrens ergeben.

Schließlich wird noch die Verwendung einer Werkstückausrichtungsvorrichtung vom vorab beschriebenen und vorgeschlagenen Typ zur Durchführung eines Verfahrens zur Repositionierung eines Werkstücks vorgeschlagen, insbesondere zur Durchführung eines Verfahrens zur Repositionierung eines Werkstücks vom vorab vorgeschlagenen und beschriebenen Typ.

Im Folgenden wird die Erfindung anhand vorteilhafter Ausführungsbeispiele und unter Bezugnahme auf die beigefügte Zeichnung näher erläutert. Es zeigen:
- Fig. 1:: eine Abfolge von Verfahrensschritten zur Ausbildung von lagerichtig ausgebildeten Gehrungsschnitten bei einem Rohr unter Verwendung eines Ausrichtungsgeräts und eines Umspannvorgangs in schematischer Querschnittsdraufsicht;
- Fig. 2:: die Richtungsanzeigeuhr eines Ausrichtungsgeräts in einer schematischen Draufsicht von vorne in unterschiedlichen Stellungen;
- Fig. 3:: ein Ausrichtungsgerät-Bausatz mit einer Richtungsanzeigeuhr und mehreren unterschiedlich dimensionierten Übergangsstücken in einer schematischen Querschnittsansicht.

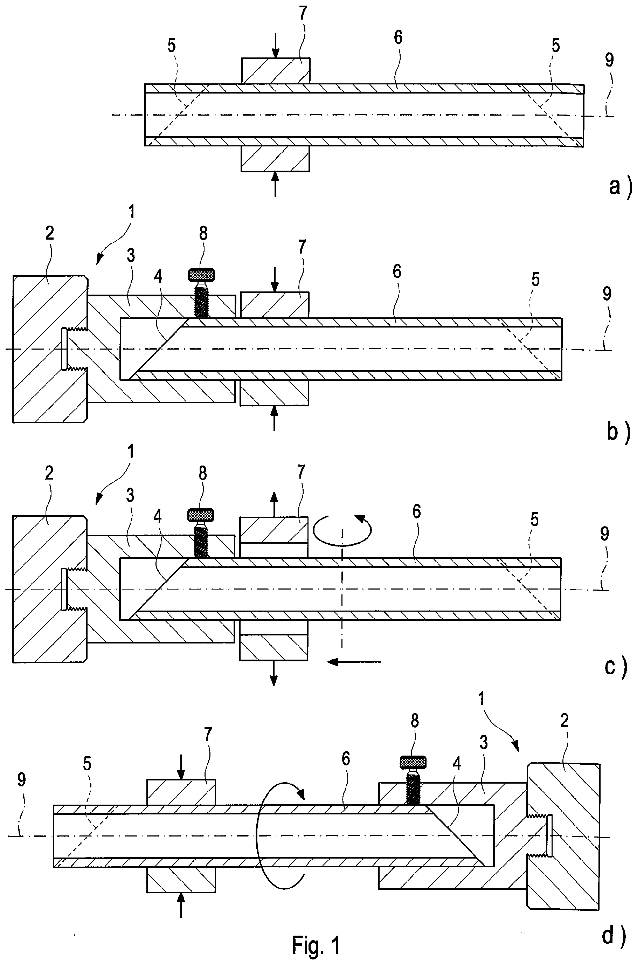

In Fig. 1 ist in einer schematischen Draufsicht eine mögliche Abfolge von Schritten zur Ausbildung zweier "antiparallel" gerichteter Gehrungsschnitte 4 (an der vorgesehenen Schnittlinie 5 wird im Rahmen des Bearbeitungsverfahrens zu einem späteren Zeitpunkt der eigentliche "antiparallele" Gehrungsschnitt ausgebildet) bei einem länglich ausgebildeten Rohr 6 mit vorliegend kreisrundem Querschnitt in einer schematischen Querschnittsansicht von oben gesehen dargestellt.

Das Rohr 6 ist zwischen zwei Spannbacken 7 einer vorliegend nicht näher dargestellten Schraubstockvorrichtung eingespannt (durch die beiden aufeinander zu gerichteten Pfeile angedeutet). Die Schraubstockvorrichtung kann Teil einer kombinierten Werkzeugeinrichtung sein, bei der eine Sägeeinrichtung, Trennschleifeinrichtung oder dergleichen mit integriert ist (derartige "Gesamtwerkzeugeinrichtungen" sind in der Praxis weit verbreitet und an sich bekannt).

Das Rohr 6 soll mit zwei "antiparallel" ausgerichteten Gehrungsschnitten 4 (späterer Gehrungsschnitt entlang der vorgesehenen Schnittlinie 5) versehen werden. "Antiparallel" heißt hierbei, dass die beiden Schnittebenen der Gehrungsschnitte 4 nicht gegeneinander verdreht sind. Es lassen sich mithin zu den beiden Gehrungsschnitten 4 zwei Flächennormalen finden, welche in einer einheitlichen Ebene liegen und einander schneiden (mit anderen Worten stehen die Flächennormalen nicht windschief zueinander). Eine derartige Anordnung von Gehrungsschnitten ist bei Installationsarbeiten häufiger vorzusehen. Selbstverständlich sind auch andere Winkellagen von Gehrungsrungsschnitten denkbar, wie beispielsweise eine parallele Anordnung zueinander, eine Verdrehung um 90° oder dergleichen. Dementsprechend ist die "antiparallele" Anordnung der vorzusehenden Gehrungsschnitte 4 vorliegend lediglich als beispielhaftes (jedoch übliches) Ausführungsbeispiel aufzufassen.

In Fig. 1a ist die vorgesehene Schnittlinie 5 des auszubildenden Gehrungsschnitts 4 als gestrichelte Linie eingezeichnet. Um eine Durchbiegung des Rohrs 6 bei der Bearbeitung desselben in Folge eines Auflastdrucks durch das verwendete Werkzeug zu minimieren, ist die (vorgesehene) Schnittlinie 5 benachbart zu den Spannbacken 7 vorgesehen (wie dies allgemein üblich ist). Dementsprechend ist das Rohr 6 hinsichtlich seiner Längsposition hochgradig asymmetrisch zwischen den Spannbacken 7 eingeklemmt.

Nach Ausbildung des Abtrennschnitts entlang der Schnittlinie 5 ist das Rohr 6 an einem Ende mit einem Gehrungsschnitt 4 versehen (Fig. 1b). Bevor die Spannbacken 7 gelöst werden, wird im Bereich des Gehrungsschnitts 4 ein Ausrichtungsgerät 1 aufgesetzt, fixiert und genullt (im Folgenden näher beschrieben).

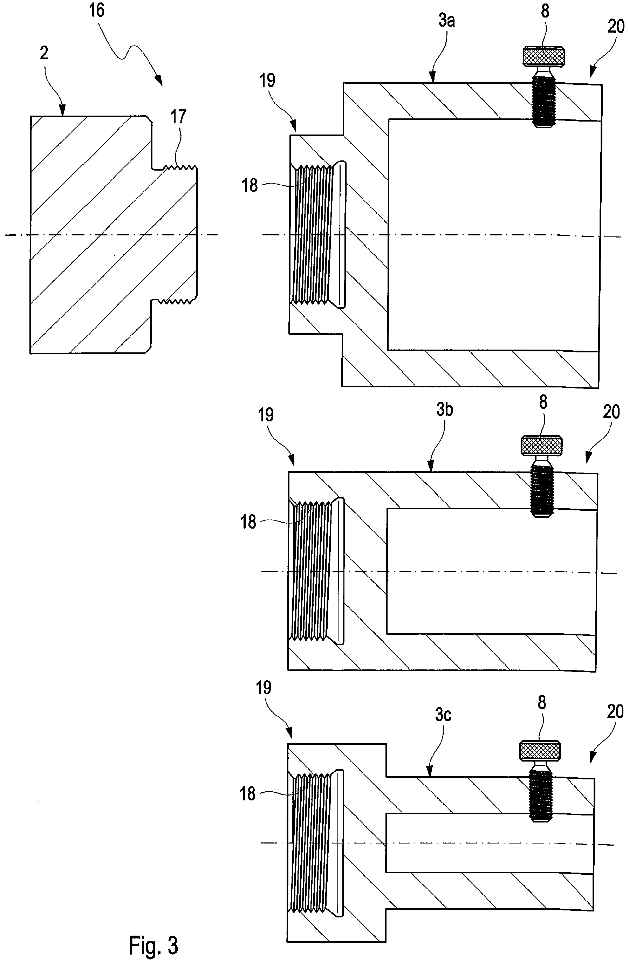

Wie aus Fig. 1 ersichtlich ist, besteht das Ausrichtungsgerät 1 im vorliegend dargestellten Ausführungsbeispiel im Wesentlichen aus einer Richtungsanzeigeuhr 2 und einem Übergangsstück 3. Das Übergangsstück 3 ist Teil eines Satzes aus unterschiedlichen Übergangsstücken (vergleiche Fig. 3), wobei eine für das jeweilige Rohr 6 (oder sonstiges Werkstück) passende Größe und/oder Querschnittsform gewählt wird. Richtungsanzeigeuhr 2 und Übergangsstück 3 sind vorliegend mittels eines Schraubengewindes 17, 18 (vorliegend "umgekehrt" zur Situation, wie sie in Figur 3 dargestellt ist) miteinander verbunden. Die Fixierung des Übergangsstücks 3 am Rohr 6 (und damit des Ausrichtungsgeräts 1 am Rohr 6) erfolgt mittels einer Spannschraube 8, welche ausreichend fest angezogen wird, dass sich das Ausrichtungsgerät 1 nicht vom Rohr 6 löst und insbesondere nicht gegenüber dem Rohr 6 verdreht. Die hierzu nötige Anzugskraft ist vergleichsweise gering, da (abgesehen von der Masse des Ausrichtungsgeräts 1) im Wesentlichen keinerlei Kräfte aufzunehmen sind. Dementsprechend ist eine (relevante) Beschädigung des Rohrs 6 bei halbwegs sachgerechter Anwendung bei üblichen Einsatzgebieten nicht zu befürchten.

Nach der Anbringung des Ausrichtungsgeräts 1 wird die Richtungsanzeigeuhr 2 noch genullt (im Folgenden noch näher beschrieben).

Danach werden die Spannbacken 7 gelöst (Fig. 1c), sodass das Rohr 6 im Wesentlichen frei bewegt werden kann. Um an der zum bereits fertig ausgebildeten Gehrungsschnitt 4 gegenüberliegenden Seite des Rohrs 6 (wo ebenfalls ein Gehrungsschnitt vorzusehen ist) einen Gehrungsschnitt anbringen zu können, muss das Rohr 6 einerseits verschoben werden, andererseits gedreht werden, was in Fig. 1c durch entsprechende Pfeile angedeutet ist (Verschiebungspfeil und Rotationspfeil).

In der neuen, "passenden" Lage ("passend" insbesondere in Längsrichtung gesehen) wird das Rohr 6 mittels des Ausrichtungsgeräts 1 hinsichtlich seiner Rotationsachse 9 (Längsrichtung des Rohrs 6) geeignet einjustiert. Anschließend werden die Spannbacken 7 wieder angezogen und entlang der vorgesehenen Schnittlinie 5 kann ein weiterer Gehrungsschnitt ausgebildet werden.

Wie bereits erwähnt, handelt es sich bei Fig. 1 um eine Querschnittsdraufsicht von oben. Dementsprechend muss das Rohr 6 zur Ausbildung des zweiten Gehrungsschnitts gegenüber seiner ursprünglichen Lage (Ausbildung des ersten Gehrungsschnitts) um 180° verdreht werden. Würde es sich bei Fig. 1 dagegen um eine Querschnittsdraufsicht von der Seite aus gesehen handeln, so wäre kein "Verdrehwinkel" erforderlich. Mit anderen Worten würde das Rohr 6 hinsichtlich seiner Rotationsausrichtung jeweils in der gleichen Winkellage einzujustieren sein.

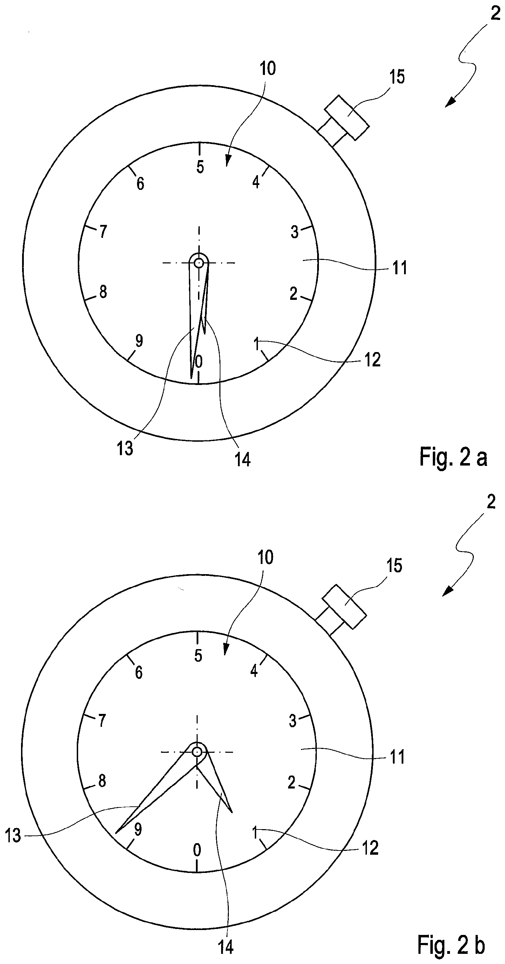

In Fig. 2 ist eine mögliche Anzeige 10 für die Richtungsanzeigeuhr 2 des Ausrichtungsgeräts 1 in Draufsicht (auf die Anzeige 10) dargestellt. Die Anzeige 10 besteht aus einem Anzeigeblatt 11 mit einer geeignet gewählten Skalierung 12 und vorliegend zwei unterschiedlich groß gewählten Zeigern 13, 14, nämlich einem (größeren) Feinzeiger 13 und einem (kleineren) Grobzeiger 14.

Weiterhin ist in der Darstellung der Fig. 2 ein Justageknopf 15 zu erkennen,auf dessen Funktion im Folgenden noch näher eingegangen wird.

Im vorliegend dargestellten Ausführungsbeispiel ist der Feinzeiger 13 übersetzt. Vorliegend ist ein Übersetzungsverhältnis mit dem Faktor 10 gewählt. Das heißt, dass sich der Feinzeiger 13 um 50° verdreht, wenn das Rohr 6 (an dem das Ausrichtungsgerät 1 angeordnet ist) um 5° verdreht wird. Dadurch kann ein besonders genaues Positionieren des Rohrs 6 besonders einfach realisiert werden. Um jedoch auch einen "Winkel-Offset" (beispielsweise benötigte Verdrehung um 180°, so wie dies bei der Verfahrensabfolge gemäß Fig.1 der Fall ist) für den Benutzer einfach und intuitiv darstellen zu können, ist zusätzlich ein Grobzeiger 14 vorgesehen, der weder übersetzt noch untersetzt ist. Mit anderen Worten verdreht sich der Grobzeiger 14 um 5°, wenn das Rohr 6, an dem das Ausrichtungsgerät 1 befestigt ist, um 5° verdreht wird.

Um die Verhältnisse deutlicher zu machen, ist die Anzeige 10 in den Figs. 2a und 2b in unterschiedlichen Stellungen dargestellt.

In Fig. 2a ist die Richtungsanzeigeuhr 2 "genullt". Eine derartige Stellung ist jederzeit durch Betätigen des Justageknopfs 15 realisierbar. Im vorliegend dargestellten Ausführungsbeispiel ist der Justageknopf 15 derart ausgeführt, dass durch eine Druckbetätigung des Justageknopfs 15 die Anzeige 10 in eine Nullstellung überführt wird (wie in Fig. 2a dargestellt). In dieser Nullstellung befinden sich sowohl der Feinzeiger 13 als auch der Grobzeiger 14 auf der Position "0" des Anzeigeblatts 11 (in Fig. 2a sind aus darstellungstechnischen Gründen die Zeiger 13, 14 leicht zueinander versetzt dargestellt, damit diese in der Zeichnung besser erkannt werden können).

Nun wird das Rohr 6, an dem das Ausrichtungsgerät 1 befestigt ist, um 30° gedreht. Dies hat zur Folge, dass sich der Grobzeiger 14 analog zur Verdrehung des Rohrs 6 ebenfalls um 30° verdreht. Der Feinzeiger 13 bewegt sich dagegen aufgrund seiner Übersetzung um 300°. Im Ergebnis ergibt sich die Stellung der Zeiger 13, 14 auf der Anzeige 10 gemäß Fig. 2b. Lediglich der Vollständigkeit halber wird darauf hingewiesen, dass bei einer Verdrehung in die andere Richtung typischerweise eine Zeigerbewegung in der entgegengesetzten Richtung erfolgen würde.

Selbstverständlich sind gegenüber dem in Fig. 2 dargestellten Ausführungsbeispiel unterschiedlichste Modifikationen denkbar. Rein beispielhaft wäre es möglich, dass das Anzeigeblatt 11 nicht dekadisch, sondern beispielsweise mit einer 12er-Teilung versehen wird. Auch ist es denkbar, dass der Justageknopf 15 anstelle eines Druckknopfs zur Nullstellung als Drehknopf ausgebildet wird, mit dem sich eine Zeigerbewegung in unterschiedliche Richtungen und auf eine beliebige Zeigerstellung realisieren lässt.

Im Übrigen ist es auch möglich, dass andere Übersetzungsverhältnisse bzw. Untersetzungsverhältnisse gewählt werden. Rein beispielhaft wäre es denkbar, dass der Feinzeiger 13 mit einer 1:1-Übertragung versehen würde (weder Übersetzung noch Untersetzung) und der Grobzeiger 14 im Verhältnis 1:10 untersetzt würde, derart, dass eine Verdrehung des Rohrs 6, an dem das Anzeigegerät 1 befestigt ist, um 360° eine Verdrehung des Grobzeigers 14 von der Stellung "0" auf die Stellung "1" bewirken würde.

In Fig.3 ist schließlich noch ein "Bausatz" 16 beispielhaft dargestellt. Der Bausatz 16 besteht aus einer Richtungsanzeigeuhr 2, welche mittels eines Schraubengewindes 17 in ein entsprechendes Innengewinde 18 eines Übergangsstücks 3 eingeschraubt werden kann. Selbstverständlich sind hier auch abweichende Methoden der Befestigung denkbar. Beim vorliegend dargestellten Bausatz 16 ist die Richtungsanzeigeuhr 2 nur einmal vorhanden. Das ergibt Sinn, da die Richtungsanzeigeuhr 2 das mechanisch aufwändigste Bauteil darstellt und dementsprechend teuer ist.

Um den Bausatz 16 für eine möglichst große Bandbreite an Werkstücken anpassbar zu machen (beispielsweise unterschiedliche Rohrdurchmesser; gegebenenfalls auch unterschiedliche Querschnittsformen; Werkstücke, welche von Rohren abweichen usw.), ist eine entsprechend große Anzahl von Übergangsstücken 3 vorgesehen. Vorliegend sind in Fig. 3 beispielhaft drei Übergangsstücke 3a, 3b, 3c dargestellt, welche jeweils für Rohre mit kreisrundem Querschnitt geeignet sind, aufgrund ihrer unterschiedlichen Dimensionierung jedoch für Rohre mit unterschiedlichen Durchmessern geeignet sind. An der rohrabgewandten Seite 19 (wo das Innengewinde 18, welches zur Verbindung mit dem Schraubgewinde 17 der Richtungsanzeigeuhr 2 dient, vorgesehen ist) sind die Übergangsstücke 3a, 3b, 3c jeweils gleichartig ausgebildet und dimensioniert.

Auf der Rohrverbindungsseite 20 sind die Übergangsstücke 3a, 3b, 3c dagegen mit einem unterschiedlichen Durchmesser (insbesondere Innendurchmesser) versehen. Auf diese Weise können die unterschiedlichen Übergangsstücke 3a, 3b, 3c mit Rohren 6 verbunden werden, die einen jeweils hierzu geeigneten Außendurchmesser aufweisen. Dementsprechend ist der Innendurchmesser der Übergangsstücke 3a, 3b, 3c im Bereich der Rohrverbindungsseite 20 entsprechend groß gewählt. Die temporäre Fixierung des Übergangsstücks 3a, 3b, 3c erfolgt mittels einer Spannschraube 8, wie sie bereits in Fig. 1 dargestellt ist und vorab beschrieben wurde.

In Fig. 3 sind drei unterschiedlich große Übergangsstücke 3a, 3b, 3c dargestellt. Die Innendurchmesser werden in Fig. 3 von oben nach unten gesehen sukzessive kleiner. Selbstverständlich kann auch eine größere Anzahl an Übergangsstücken 3 vorgesehen werden, um eine feinere "Rasterung" zu ermöglichen. Ebenso ist es denkbar, dass auch Übergangsstücke vorgesehen werden, welche beispielsweise unterschiedliche Querschnittsformen abdecken oder auch unterschiedliche Arten der temporären Befestigung des Ausrichtungsgeräts 1 an einem Werkstück ermöglichen.

Im Übrigen ist es auch möglich, dass (zusätzliche) Übergangsstücke 3 als separat erhältliche "Nachrüstteile" vertrieben werden. Dies schließt es nicht aus, dass eine Art "Grundbausatz" 16 vertrieben wird, der aus einer Richtungsanzeigeuhr 2 und einem "Initialsatz" aus besonders typischen Übergangsstücken 3 besteht.

Der Vollständigkeit halber wird darauf hingewiesen, dass die in den Figs. 1 bis 3 dargestellten Ausrichtungsgeräte 1 derart ausgebildet sind, dass lediglich ein Verdrehen um eine einzige Achse von der Richtungsanzeigeuhr 2 dargestellt wird. Diese "Einschränkung" ist bei den meisten Anwendungsfällen nicht nur nicht problematisch, sondern in der Regel sogar vorteilhaft. Beispielsweise erfolgt gemäß den Verfahrensschritten gemäß Fig. 1 im Laufe des Umspannvorgangs eine Verdrehung des Rohrs 6 um eine Achse, die vom Ausrichtungsgerät 1 nicht angezeigt wird (und auch überhaupt nicht angezeigt werden muss).

In Fällen, in denen zusätzliche Informationen erforderlich sind, ist es selbstverständlich möglich, dass mehrere Ausrichtungsgeräte 1 mit unterschiedlieher Ausrichtung am Werkstück temporär befestigt werden. Alternativ oder zusätzlich ist es auch möglich, dass das Ausrichtungsgerät 1 derart ausgebildet ist, dass es Verdrehungen in unterschiedliche Richtungen darstellen kann.

### Bezugszeichenliste:

1. Ausrichtungsgerät
2. Richtungsanzeigeuhr
3. Übergangsstück
4. Gehrungsschnitt
5. Vorgesehene Schnittlinie
6. Rohr
7. Spannbacken
8. Spannschraube
9. Rotationsachse
10. Anzeige
11. Anzeigeblatt
12. Skalierung
13. Feinzeiger
14. Grobzeiger
15. Justageknopf
16. Bausatz
17. Schraubgewinde
18. Innengewinde
19. Rohrabgewandte Seite
20. Rohrverbindungsseite

## Patentansprüche

1. Werkstückausrichtungsvorrichtung (1) zur Ausrichtung eines Werkstücks (6) bei einem Umspannvorgang des Werkstücks (6) während dessen Bearbeitung, bevorzugt zur Ausrichtung des Werkstücks (6) bezüglich genau einer Drehachse (9), umfassend eine Absolutrichtungsanzeigeeinrichtung (2), die so eingerichtet ist, dass sie eine Überprüfung ermöglicht, ob sich das Werkstück nach einem Umspannvorgang in einer definierten Position relativ zu einer extern vorgegebenen Absolutrichtung befindet, sowie eine Befestigungseinrichtung (3, 3a, 3b, 3c) zur temporären Befestigung der Werkstückausrichtungsvorrichtung (1) am Werkstück (6), wobei die Befestigungseinrichtung (3, 3a, 3b, 3c) größenanpassbar zur Anpassung an unterschiedlich große und/oder unterschiedlich geformte Werkstücke ausgebildet ist, **dadurch gekennzeichnet, dass** die Befestigungseinrichtung (3, 3a, 3b, 3c) als austauschbares Übergangselement (3, 3a, 3b, 3c) ausgebildet und mittels eines Schraubengewindes mit der Absolutrichtungsanzeigeeinrichtung (2) verbunden ist, wobei das Übergangselement (3, 3a, 3b, 3c) so ausgebildet ist, dass es in einer Seite das Werkstück (6) zur Befestigung aufnehmen kann und die Absolutrichtungsanzeigeeinrichtung (2) an der anderen Seite des Übergangselements an das Übergangselement (3, 3a, 3b, 3c) angeschraubt ist.

2. Werkstückausrichtungsvorrichtung (1) nach Anspruch 1, **dadurch gekennzeichnet, dass** die Befestigungseinrichtung (3) als eine, eine gesonderte Korrespondenzbefestigungseinrichtung entbehrende Befestigungseinrichtung (3) ausgebildet ist.

3. Werkstückausrichtungsvorrichtung (1) nach einem der vorangehenden Ansprüche, **dadurch gekennzeichnet, dass** die Befestigungseinrichtung mehrteilig ausgebildet ist und insbesondere ein anpassbares und/oder auswechselbares Übergangselement (3a, 3b, 3c) aufweist.

4. Werkstückausrichtungsvorrichtung (1) nach einem der vorangehenden Ansprüche, **dadurch gekennzeichnet, dass** die Befestigungseinrichtung (3) drehfest und/oder drehfest befestigbar ausgebildet ist, derart, dass eine zumindest drehfeste Verbindung zwischen Werkstück (6) und Absolutrichtungsanzeigeeinrichtung (2) bezüglich vorzugsweise genau einer Drehachse (9) gegeben ist.

5. Werkstückausrichtungsvorrichtung (1) nach einem der vorangehenden Ansprüche, **dadurch gekennzeichnet, dass** die Absolutrichtungsanzeigeeinrichtung (2) eine Einrichtung aufweist oder als Einrichtung ausgebildet ist, die der Gruppe entnommen ist, welche Schwerkraftrichtungsmesseinrichtungen, Schwerkraftrichtungsanzeigeeinrichtungen, Magnetfeldlinienrichtungsmesseinrichtungen, Magnetfeldlinienrichtungsanzeigeeinrichtungen, Kreiseleinrichtungen, Iotartige Einrichtungen, Lichtstrahleinrichtungen, Lichtstrahlerzeugungseinrichtungen, Lichtstrahlbeeinflussungseinrichtungen und Lichtreflexionseinrichtungen umfasst.

6. Werkstückausrichtungsvorrichtung (1) nach einem der vorangehenden Ansprüche, **dadurch gekennzeichnet, dass** die Absolutrichtungsanzeigeeinrichtung (2) eine Umsetzungseinrichtung, insbesondere eine Untersetzungseinrichtung und/oder eine Übersetzungseinrichtung aufweist.

7. Werkstückausrichtungsvorrichtung (1) nach einem der vorangehenden Ansprüche, insbesondere nach Anspruch 6, **dadurch gekennzeichnet, dass** die Werkstückausrichtungsvorrichtung (1), insbesondere die Absolutrichtungsanzeigeeinrichtung (2) und/oder die Befestigungseinrichtung (3) ein Nullstellungsmittel (15), ein Justagemittel, ein Verstellmittel und/oder ein Einstellmittel aufweist.

8. Werkstückausrichtungsvorrichtung (1) nach einem der vorangehenden Ansprüche, insbesondere nach Anspruch 6 oder 7, **dadurch gekennzeichnet, dass** die Absolutrichtungsanzeigeeinrichtung (2) zumindest eine Informationsanzeigeeinrichtung (10) aufweist, insbesondere eine Messwertanzeigeeinrichtung (10).

9. Verfahren zum definierten Repositionieren eines Werkstücks (6) bei einem Umspannvorgang während der Bearbeitung des Werkstücks (6), wobei vor der Repositionierung des Werkstücks (6) eine Ausrichtung des Werkstücks (6) relativ zu einer definierten externen Absolutrichtung bezüglich vorzugsweise genau einer Rotationsachse (9) des Werkstücks (6) bestimmt wird und nach dem Repositionieren das Werkstück mit einer definierten Ausrichtung bezüglich der externen Absolutrichtung repositioniert wird, wobei bevorzugt die vorab bestimmte Ausrichtung des Werkstücks (6) wiederhergestellt wird, **dadurch gekennzeichnet, dass** die Bestimmung der Ausrichtung des Werkstücks (6) mittels einer temporär angebrachten Werkstückausrichtungsvorrichtung (1) nach einem der Ansprüche 1 bis 8 erfolgt.

10. Verfahren nach Anspruch 9, **dadurch gekennzeichnet, dass** die Bestimmung der Ausrichtung des Werkstücks (6), insbesondere eine Befestigung einer Werkstückausrichtungsvorrichtung (1), an einer Seite des Werkstücks (6) erfolgt, welche vorzugsweise zeitnah vor der Repositionierung des Werkstücks (6) bearbeitet wurde, wobei die Bestimmung der Ausrichtung des Werkstücks (6) bevorzugt nach der Bearbeitung des Werkstücks (6) in diesem Bereich erfolgt.

11. Verfahren nach einem der Ansprüche 9 oder 10, **dadurch gekennzeichnet, dass** die vorzugsweise genau eine Rotationsachse (9) des Werkstücks (6) zumindest im Wesentlichen mit einer Symmetrieachse (9) des Werkstücks (6) übereinstimmt, insbesondere mit einer Rotationssymmetrieachse (9) und/oder einer Spiegelsymmetrieachse und/oder einer Punktsymmetrieachse und/oder einer Normalen zu einer Spiegelsymmetrieebene und/oder einer Normalen zu einer Punktsymmetrieebene des Werkstücks (6).

12. Verwendung einer Werkstückausrichtungsvorrichtung (1) nach einem der Ansprüche 1 bis 8 zur Durchführung eines Verfahrens zur Repositionierung eines Werkstücks (6), insbesondere zur Durchführung eines Verfahrens nach einem der Ansprüche 9 bis 11.

## Claims

1. Workpiece alignment device (1) for aligning a workpiece (6) when re-chucking the workpiece (6) during its machining, preferably for aligning the workpiece (6) in relation to precisely one rotation axis (9), comprising an absolute direction indicating device (2) configured to enable a check on whether the workpiece is located in a defined position relative to an externally specified absolute direction after re-chucking, and a fastening device (3, 3a, 3b, 3c) for temporary fastening of the workpiece alignment device (1) to the workpiece (6), the fastening device (3, 3a, 3b, 3c) being designed size-adaptable for adaptation to differently sized and/or differently shaped workpieces, **characterized in that** the fastening device (3, 3a, 3b, 3c) is designed as a replaceable transition element (3, 3a, 3b, 3c) and is connected by means of a screw thread to the absolute direction indicating device (2), the transition element (3, 3a, 3b, 3c) being designed such that it can receive the workpiece (6) on one side for fastening it and the absolute direction indicating device (2) is bolted to the transition element (3, 3a, 3b, 3c) on the other side of the transition element.

2. Workpiece alignment device (1) according to claim 1, **characterized in that** the fastening device (3) is designed as a fastening device (3) dispensing with a separate corresponding fastening device.

3. Workpiece alignment device (1) according to one of the preceding claims, **characterized in that** the fastening device is designed multi-part and in particular has an adaptable and/or replaceable transition element (3a, 3b, 3c).

4. Workpiece alignment device (1) according to one of the preceding claims, **characterized in that** the fastening device (3) is designed non-rotatable and/or non-rotatably fastenable, such that there is an at least non-rotatable connection between the workpiece (6) and the absolute direction indicating device (2) in relation to preferably precisely one rotation axis (9).

5. Workpiece alignment device (1) according to one of the preceding claims, **characterized in that** the absolute direction indicating device (2) has a device or is designed as a device taken from the group comprising gravity direction measuring devices, gravity direction indicating devices, magnetic field line direction measuring devices, magnetic field line direction indicating devices, gyroscopic devices, plumb devices, light beam devices, light beam generating devices, light beam influencing devices and light reflection devices.

6. Workpiece alignment device (1) according to one of the preceding claims, **characterized in that** the absolute direction indicating device (2) has a conversion device, in particular a reducing device and/or an enlarging device.

7. Workpiece alignment device (1) according to one of the preceding claims, in particular according to claim 6, **characterized in that** the workpiece alignment device (1), in particular the absolute direction indicating device (2) and/or the fastening device (3), has a zero setting means (15), an adjustment means and/or a setting means.

8. Workpiece alignment device (1) according to one of the preceding claims, in particular according to claim 6 or 7, **characterized in that** the absolute direction indicating device (2) has at least one information indicating device (10), in particular a measured value indicating device (10).

9. Method for defined repositioning of a workpiece (6) when re-chucking during machining of the workpiece (6), an alignment of the workpiece (6) relative to a defined external absolute direction in relation to preferably precisely one rotation axis (9) of the workpiece (6) being determined before repositioning of the workpiece (6), and the workpiece being repositioned with a defined alignment in relation to the external absolute direction after repositioning, the previously determined alignment of the workpiece (6) preferably being restored, **characterized in that** the alignment of the workpiece (6) is determined by means of a temporarily attached workpiece alignment device (1) according to one of claims 1 to 8.

10. Method according to claim 9, **characterized in that** the alignment of the workpiece (6), in particular a fastening of a workpiece alignment device (1), is determined on one side of the workpiece (6) which was preferably machined shortly before repositioning of the workpiece (6), the alignment of the workpiece (6) being determined preferably after machining of the workpiece (6) in this area.

11. Method according to one of claims 9 or 10, **characterized in that** the preferably precisely one rotation axis (9) of the workpiece (6) coincides at least substantially with a symmetry axis (9) of the workpiece (6), in particular with a rotational symmetry axis (9) and/or a mirror symmetry axis and/or a point symmetry axis and/or a normal to a mirror symmetry plane and/or a normal to a point symmetry plane of the workpiece (6).

12. Use of a workpiece alignment device (1) according to one of claims 1 to 8 for performing a method for repositioning a workpiece (6), in particular for performing a method according to one of claims 9 to 11.

## Revendications

1. Dispositif d'orientation de pièce (1) pour orienter une pièce (6) lors d'un processus de serrage de la pièce (6) pendant son usinage, de préférence pour orienter la pièce (6) concernant exactement un axe de rotation (9), comprenant un dispositif d'affichage de direction absolue (2) qui est configuré de sorte à permettre un contrôle pour vérifier si la pièce se trouve, après un processus de serrage, dans une position définie par rapport à une direction absolue prédéfinie de manière externe, ainsi qu'un dispositif de fixation (3, 3a, 3b, 3c) pour fixer temporairement le dispositif d'orientation de la pièce (1) à la pièce (6), sachant que le dispositif de fixation (3, 3a, 3b, 3c) est adaptable en taille pour permettre son adaptation à des pièces de taille différente et/ou de forme différente, **caractérisé en ce que** le dispositif de fixation (3, 3a, 3b, 3c) est conçu sous forme d'élément de transition échangeable (3, 3a, 3b, 3c) et est relié au dispositif d'affichage de direction absolue (2) au moyen d'un filetage, sachant que l'élément de transition (3, 3a, 3b, 3c) est conçu de sorte à pouvoir loger d'un côté la pièce (6) pour la fixer et que le dispositif d'affichage de direction absolue (2) est vissé à l'élément de transition (3, 3a, 3b, 3c), de l'autre côté de l'élément de transition.

2. Dispositif d'orientation de pièce (1) selon la revendication 1, **caractérisé en ce que** le dispositif de fixation (3) est conçu sous forme de dispositif de fixation (3) exempt d'un dispositif de fixation correspondant particulier.

3. Dispositif d'orientation de pièce (1) selon l'une des revendications précédentes, **caractérisé en ce que** le dispositif de fixation est constitué de plusieurs éléments et présente notamment un élément de transition (3a, 3b, 3c) adaptable et/ou échangeable.

4. Dispositif d'orientation de pièce (1) selon l'une des revendications précédentes, **caractérisé en ce que** le dispositif de fixation (3) est conçu solidaire en rotation et/ou fixable de manière solidaire en rotation de sorte qu'il existe une liaison au moins solidaire en rotation entre la pièce (6) et le dispositif d'affichage de direction absolue (2) concernant de préférence exactement un axe de rotation (9).

5. Dispositif d'orientation de pièce (1) selon l'une des revendications précédentes, **caractérisé en ce que** le dispositif d'affichage de direction absolue (2) présente un dispositif ou est conçu sous forme de dispositif appartenant au groupe qui comprend les dispositifs de mesure du sens de gravité, dispositifs d'affichage du sens de gravité, dispositifs de mesure des lignes de force du champ magnétique, dispositifs d'affichage des lignes de force du champ magnétique, dispositifs gyroscopiques, dispositifs de style fil à plomb, dispositifs à rayon lumineux, dispositifs de génération de rayon lumineux, dispositifs influençant les rayons lumineux et dispositifs de réflexion des rayons lumineux.

6. Dispositif d'orientation de pièce (1) selon l'une des revendications précédentes, **caractérisé en ce que** le dispositif d'affichage de direction absolue (2) présente un dispositif de transmission, notamment un dispositif de réduction et/ou un dispositif de surmultiplication.

7. Dispositif d'orientation de pièce (1) selon l'une des revendications précédentes, notamment selon la revendication 6, **caractérisé en ce que** le dispositif d'orientation de pièce (1), notamment le dispositif d'affichage de direction absolue (2) et/ou le dispositif de fixation (3) présente un moyen de mise en position zéro (15), un moyen d'ajustage, un moyen de décalage et/ou un moyen de réglage.

8. Dispositif d'orientation de pièce (1) selon l'une des revendications précédentes, notamment selon la revendication 6 ou 7, **caractérisé en ce que** le dispositif d'affichage de direction absolue (2) présente au moins un dispositif d'affichage d'information (10), notamment un dispositif d'affichage de la valeur mesurée (10).

9. Procédé pour le repositionnement défini d'une pièce (6) lors d'un processus de serrage pendant l'usinage de la pièce (6), sachant qu'avant le repositionnement de la pièce (6), une orientation de la pièce (6) est déterminée relativement à une direction absolue externe définie concernant de préférence exactement un axe de rotation (9) de la pièce (6) et qu'après le repositionnement, la pièce est repositionnée avec une orientation définie concernant la direction absolue externe, sachant que de préférence, l'orientation déterminée au préalable de la pièce (6) est rétablie, **caractérisé en ce que** la détermination de l'orientation de la pièce (6) a lieu au moyen d'un dispositif d'orientation de pièce (1) installé temporairement selon l'une des revendications 1 à 8.

10. Procédé selon la revendication 9, **caractérisé en ce que** la détermination de l'orientation de la pièce (6), notamment une fixation du dispositif d'orientation de pièce (1), a lieu sur un côté de la pièce (6) qui a été usiné de préférence peu avant le repositionnement de la pièce (6), sachant que la détermination de la pièce (6) a lieu de préférence après l'usinage de la pièce (6) dans cette zone.

11. Procédé selon l'une des revendications 9 ou 10, **caractérisé en ce que** ledit de préférence exactement un axe de rotation (9) de la pièce (6) concorde au moins essentiellement avec un axe de symétrie (9) de la pièce (6), notamment avec un axe de symétrie par rotation (9) et/ou un axe de symétrie axiale et/ou un axe de symétrie centrale et/ou une normale à un plan de symétrie axiale et/ou une normale à un plan de symétrie centrale de la pièce (6).

12. Utilisation d'un dispositif d'orientation de pièce (1) selon l'une des revendications 1 à 8 pour réaliser un procédé destiné à repositionner une pièce (6), notamment pour réaliser un procédé selon l'une des revendications 9 à 11.
